Europäisches Patentamt

European Patent Office

Office européen des brevets

(19)

(11) Veröffentlichungsnummer : **0 460 338 B1**

(12) **EUROPÄISCHE PATENTSCHRIFT**

(45) Veröffentlichungstag der Patentschrift :
27.07.94 Patentblatt 94/30

(51) Int. Cl.$^5$ : **B23K 26/00**

(21) Anmeldenummer : **90810406.0**

(22) Anmeldetag : **05.06.90**

(54) **Verfahren und Vorrichtung zum Schneiden von Material.**

(43) Veröffentlichungstag der Anmeldung :
**11.12.91 Patentblatt 91/50**

(45) Bekanntmachung des Hinweises auf die
Patenterteilung :
**27.07.94 Patentblatt 94/30**

(84) Benannte Vertragsstaaten :
**CH DE FR GB IT LI**

(56) Entgegenhaltungen :
**EP-A- 0 200 089
FEINWERKTECHNIK + MESSTECHNIK Bd. 95,
Nr. 6, Sept./Okt. 1987, München, DESeiten 381
- 388; H.G. TREUSCH et al. :
"Werkstoffbearbeitung mitLaserstrahlung"**

(56) Entgegenhaltungen :
**JOURNAL OF APPLIED PHYSICS. vol. 63, no.
8, 15 April 1988, New York, US Seiten3958 -
3960; N. SMITH et al.: "Modified magnetic
properties in laser weldedmaterials"
PROCEEDINGS OF THE IEEE vol. 58,no. 12,
Dezember 1970, New York, US Seiten 1899-
1913; R. B. CHESLER et al.: "An Experimental
and Theoretical Study of HighRepetition Rate
Q-Switched Nd:YA1G Lasers"**

(73) Patentinhaber : **R. AUDEMARS SA
Via Ponteggia
CH-6814 Cadempino (CH)**

(72) Erfinder : **Sogni, Renato
Via Monte Olleggiasco 17
I-28040 Olleggio Castello/Prov.de Novara (IT)**

(74) Vertreter : **Seehof, Michel et al
c/o AMMANN PATENTANWAELTE AG BERN
Schwarztorstrasse 31
CH-3001 Bern (CH)**

EP 0 460 338 B1

**Beschreibung**

Die vorliegende Erfindung bezieht sich auf ein Verfahren und Vorrichtung zum Schneiden von Material, insbesondere von magnetisierbarem Material, gemäss Oberbegriff von Patentanspruch 1, bzw. 5.

Seit den 60er Jahren, als man begann Laseranlagen für industrielle Zwecke zu bauen, sind eine Vielzahl von Festkörperlaser, mit einem Rubin- und insbesondere auch YAG-Neodymstab als aktivem Medium entworfen, erprobt und auch erfolgreich angewendet worden. Bei der Bearbeitung von kleinen Teilen für die Mikroelektronik und vor allem auch die Uhrenindustrie haben sich Laseranlagen für das Schweissen und auch für das Bohren durchgesetzt. Für das Schneiden und das Bearbeiten von grösseren Teilen werden in der Regel chemische Gaslaser, insbesondere $CO_2$-Laser eingesetzt, die im Rahmen der vorliegenden Erfindung nicht behandelt werden.

Bei den Festkörperlasern sind verschiedene Betriebsarten bekannt, so unter anderem der gepulste Betrieb, der Dauerstrichbetrieb sowie als eine Art des Dauerstrichbetriebes der sogenannte Q-Switch Laser. Dabei werden die Reflexionsbedingungen in der Laserkavität periodisch verändert, so dass die Laserstrahlung nicht kontinuierlich sondern gepulst ausgesandt wird, obwohl die Erregungsenergie, die hauptsächlich von einer Lampe stammt, dauernd angeschaltet ist. Die periodische Veränderung der Güte der Kavität kann mittels verschiedener Verfahren durchgeführt werden, beispielsweise durch rotierende Spiegel und vor allem mittels einer akusto-optischen Zelle, siehe beispielsweise einen grundlegenden Artikel "An Experimental and Theoretical Study of High Repetition Rate Q-Switched Nd: YAlG Lasers; Proceedings of the IEEE, Vol. 58, No. 12, December 1970". Im allgemeinen werden solche Q-Switch Laser für theoretische Studien oder auch zur Herstellung von sogenannten Riesenimpulsen verwendet.

Beim Herausarbeiten von Konturen an oder in Uhrenteilen oder mikroelektronischen Bauelementen, vor allem beim Bohren von Löchern in Uhrensteinen oder in Magneten, die im Rotor eines Kleinstmotors, beispielsweise auch für Uhren verwendet werden, ist die bekannte mangelnde Güte der Schnittlinie, oder der Rundheit oder der Genauigkeit der Löcher von grossem Nachteil. Beim Bohren von Löchern in Uhrensteine oder Magnetrondellen müssen diese Objekte auf Drähte aufgezogen und auf ein genaues Mass grandiert werden, welcher Vorgang einen grossen Zeitaufwand benötigt.

Ein Verfahren gemäss dem Oberbegriff von Patentanspruch 1 ist aus der EP-A-200 089 bekannt und bezieht sich auf die Bildung von schmalen, metallfreien Streifen in der Metallschicht von Kunststoffolien. Daraus kann ein Fachmann entnehmen, dass Streifen durch Aneinanderreihen von sich überlappenden Bohrungen hergestellt werden können, doch lässt sich dieses Verfahren nicht für die Herstellung von Löchern ohne Nachbearbeitung in viel dickeren Plättchen verwenden.

Es ist von diesem Stand der Technik ausgehend Aufgabe der vorliegenden Erfindung ein Verfahren zum Schneiden von magnetisierbarem Material, insbesondere von Löchern darin, anzugeben, bei dem eine Nachbearbeitung entfällt und die Magnetisierbarkeit des Materials durch die entstehende Hitze nicht zerstört wird. Eine weitere Aufgabe der Erfindung ist es, eine Vorrichtung anzugeben, die die Erzeugung von kreisrunden Löchern gestattet, die nicht nachbearbeitet, bzw. grandiert werden müssen. Diese Aufgaben werden in den beiden unabhängigen Patentansprüchen 1 und 5 gelöst.

Die Erfindung wird im folgenden anhand einer Zeichnung von Ausführungsbeispielen näher erläutert.

Figur 1  zeigt rein schematisch ein Ausführungsbeispiel einer erfindungsgemässen Laseranlage,
Figur 2  zeigt eine an eine bestimmte Bearbeitung angepasste Impulsform,
Figur 3  zeigt ein erstes Ausführungsbeispiel einer Bearbeitungsoptik,
Figur 4  zeigt schematisch und im vergrösserten Massstab die Herstellung eines Loches,
Figur 5  zeigt ein mit der Anlage gemäss den Figuren 1 - 3 hergestelltes Endprodukt,
Figur 6  zeigt schematisch eine Phase des Herstellungsverfahren für das Produkt gemäss Figur 5 und
Figur 7  zeigt eine Ausführungsvariante der Bearbeitungsoptik.

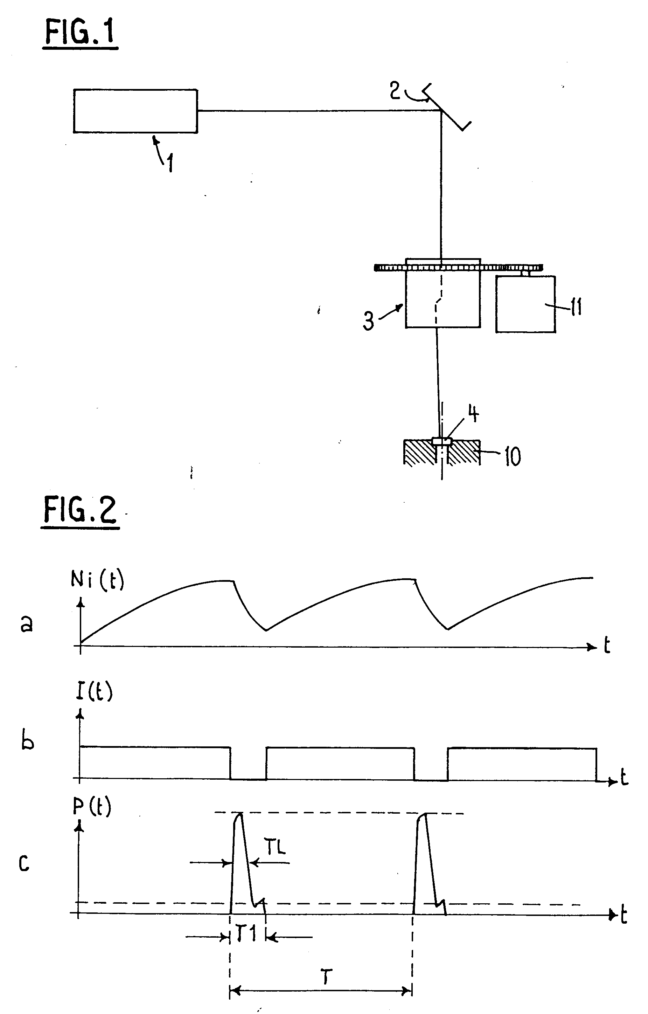

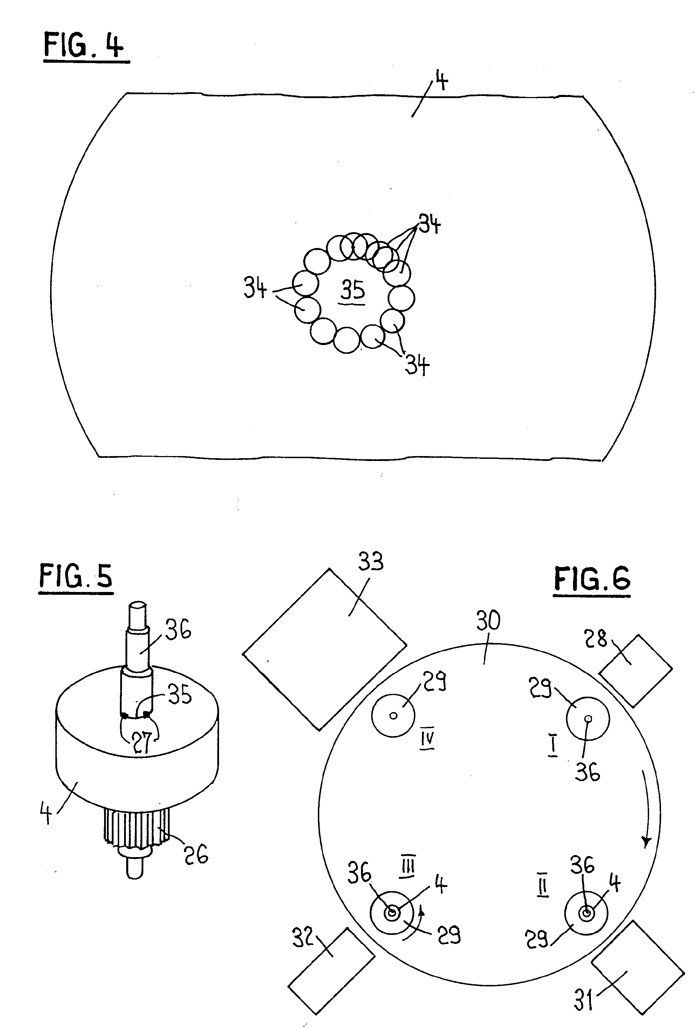

Der in Figur 1 mit 1 bezeichnete Kasten beinhaltet einen Dauerstrich YAG-Neodym-Laser, in dessen Kavität eine akusto-optische Zelle angeordnet ist, um die Güte des Lasers periodisch zu ändern. Das heisst mit anderen Worten, dass es sich um einen an sich bekannten Dauerstrich Q-Switch-Laser handelt, dessen Komponenten auf dem Markt frei erhältlich sind oder in bekannter Weise herstellbar sind. Im vorliegenden Fall wird für das Schneiden von Konturen oder für die Anwendung gemäss den Figuren 4-6 die Güte der Laserkavität gemäss den Diagrammen der Figur 2 geschaltet. Der YAG-Neodym-Stab wird mittels einer Kryptonlampe mit einer Ausgangsleistung von etwa 650 W gepumpt. Die akusto-optische Q-Switch Schaltung wird mit einem Radiofrequenzsignal gemäss Figur 2b beaufschlagt, wobei die Wiederholfrequenz $f = \frac{1}{T}$ zwischen 2500 und 3500 Hz liegt. Bei der Verwendung von magnetisierbaren Material, beispielsweise eine Samarium-Cobaltlegierung hat es sich herausgestellt, dass eine relativ lange Abkühlphase zweckmässig ist, damit die Temperatur nicht über den Curiepunkt steigt. Im vorliegenden Beispiel wurde ein Verhältnis $T:T_1$ von 300:1 gewählt, d.h.

EP 0 460 338 B1

dass die Zelle alle 300 Mikrosekunden eine Mikrosekunde geöffnet wird, wobei dieses Verhältnis T:T$_1$ selbstverständlich regelbar ist, z.B. zwischen 250-350:1. In Figur 2a erkennt man die Veränderung der Inversionsdichte Ni in Abhängigkeit von der Zeit t und in Figur 2c ist schematisch die Leistung des Lasers aufgezeichnet. Die mittlere Zeitdauer des Laserimpulses T beträgt etwa 100 Nanosekunden, während die Leistung ungefähr 1 MW beträgt. Durch diese kurzen Impulse wird zudem erreicht, dass das Material sehr schnell verdampft, ohne die Umgebung zu erwärmen.

Um aus einem Material eine beliebige Kontur ausschneiden zu können, insbesondere auch einen Kreis, ist es notwendig zwischen dem Laserstrahl und dem zu bearbeitenden Werkstück eine Relativbewegung zu erzeugen. Um einen Kreis auszuschneiden, ist es beispielsweise möglich, das in einem Arbeitstisch eingespannte Werkstück exzentrisch zu drehen oder es ist denkbar, den Laserstrahl durch einen Ablenkspiegel oder Prisma oder durch eine Auslenkoptik 3 gemäss Fig. 1 auszulenken. Für andere translatorische Bewegungen wird in der Regel ein Arbeitstisch verwendet, der in der Ebene in beiden Koordinaten gesteuert verschoben werden kann. Selbstverständlich ist auch eine Kombination der Bewegung des Ablenkspiegels, der Auslenkoptik und des Koordinatentisches möglich, und selbstverständlich zusammen mit einer weiteren Ablenkoptik.

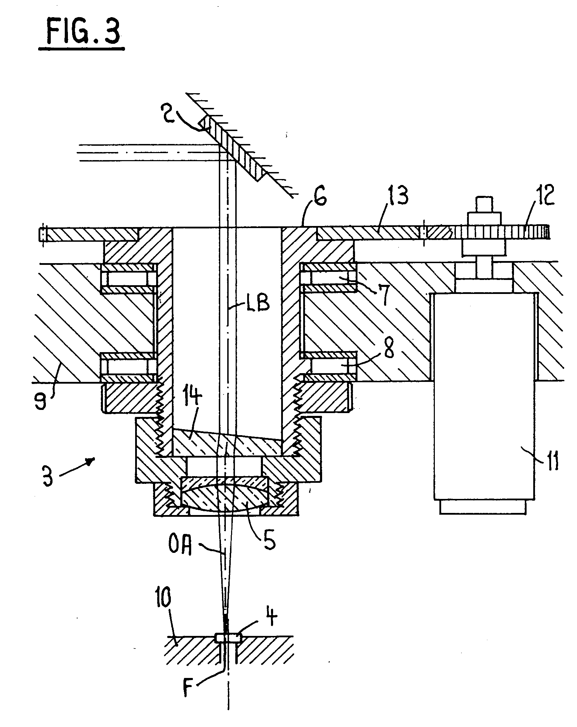

Im vorliegenden Ausführungsbeispiel zum Schneiden von Löchern von beispielsweise 300 µm Durchmesser, wurde eine Bearbeitungsoptik 3 entwickelt, die anhand von Figur 3 näher erläutert wird. Da die Optik 3 die Aufgabe hat, ein Loch in das Werkstück 4, im vorliegenden Beispiel ein Plättchen aus einer Samarium-Cobaltlegierung herzustellen, ist sie im wesentlichen zylindrisch, d.h. rotationssymmetrisch aufgebaut. Die aus mehreren Linsen aufgebaute eigentliche Fokussieroptik 5 ist in einer drehbaren Halterung 6 befestigt, die ihrerseits über zwei Lager 7 und 8 in einer Platte 9 gehalten ist, welche ihrerseits zu einer Werkbank oder -tisch oder dergleichen gehört und gegenüber dem Halter 10 des Werkstückes 4 verschwenkbar sein kann. Die Halterung 6 wird von einem Motor 11 über Zahnräder 12 und 13 in eine schnelle Drehung von beispielsweise 20 Umdrehungen pro Sekunde versetzt. In der Halterung 6, oberhalb der Fokussieroptik 5, befindet sich eine Keilplatte 14, die den Strahl LB parallel versetzt, wie dies in Figur 3 angedeutet ist. Die optische Achse OA der Fokussieroptik 5 ist auf den versetzten Strahl zentriert derart, dass der Brennpunkt F der Fokussieroptik gegenüber der Achse LB des Laserstrahles um den halben gewünschten Lochdurchmesser versetzt ist, beispielsweise um 150 µm. Dadurch, dass die optische Achse der Fokussieroptik auf den versetzten Strahl zentriert ist, entsteht bei Drehung des optischen Systems, Rundlauf selbstverständlich vorausgesetzt, ein genau kreisrundes Loch.

In Figur 4 ist schematisch das Verfahren zur Herstellung eines Loches 35 im Werkstück 4 dargestellt. Dabei werden überlappende Einzelbohrungen 34 erzeugt derart, dass die Teilstücke zwischen den einzelnen Bohrungen geglättet werden und ein Loch 35 mit derart guten Eigenschaften entsteht, dass das magnetisierbare Plättchen direkt auf die Achse 36 eines Rotors aufgesetzt und angeschweisst werden kann, ohne dass das Loch vorher grandiert werden muss, wie dies bei den bisherigen Bohrverfahren der Fall war. Im vorliegenden Beispiel beträgt der Durchmesser der einzelnen Bohrungen ungefähr ein Viertel des Enddurchmessers, doch sind selbstverständlich die Werte variierbar und durch die Wahl der Brennweite der Fokussieroptik einerseits, und die Ausgestaltung der Keilplatte andererseits einstellbar.

In einem Beispiel beträgt der Durchmesser des Samarium-Cobaltplättchens 1,25 mm, dessen Dicke 0,5 mm und der Durchmesser des Loches 0,3 mm. Während der Aussendurchmesser der Plättchen eine untergeordnete Rolle spielt, liegt ein sinnvoller, jedoch nicht beschränkender Anwendungsbereich bei einem Lochdurchmesser von grösser als 0,08 mm und einer Dicke zwischen 0,1 und 2 mm. Wie bereits erwähnt, wird mit einer Umdrehungsgeschwindigkeit des optischen Systems von 10 bis 30 Umdrehungen pro Sekunde und einer Frequenz des Q-Switch-Systems von über 2500 Hz gearbeitet, da für dieses Material eine relativ lange Abkühlzeit notwendig ist, wobei die akusto-optische Zelle in einem Verhältnis von 1:250 bis 1:350 geöffnet wird. Bei der Verwendung von anderen Materialien muss das Verhältnis der Durchlasszeit zur Verschlusszeit ermittelt werden, woraus sich dann die Schaltfrequenz für die Q-Switch-Zelle und die Rotationsgeschwindigkeit der Optikhalterung ergeben.

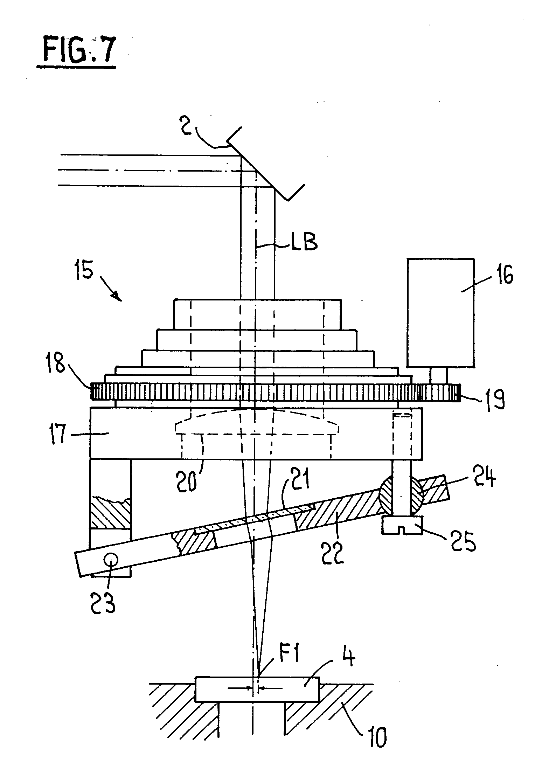

In Figur 7 ist als Ausführungsvariante die Bearbeitungsoptik 15 dargestellt, wobei der Motor 16 beispielsweise oberhalb der Halterung angeordnet ist. In der drehbaren Halterung 17 mit dem Zahnrad 18, das mit dem Antrieb 19 des Motors 16 kämmt, ist die Fokussieroptik 20 angeordnet, wobei deren optischen Achse mit der Achse LB des Laserstrahles zusammenfällt. Unterhalb der Fokussieroptik 20 ist eine Ablenkplatte 21 angeordnet, die in einem beweglichen Halter 22 gehalten ist. Der Halter 22 ist an einer Seite um den Drehpunkt 23 drehbar und auf der anderen Seite an einer Kugel 24 gehalten, die an einer Stellschraube 25 angebracht ist, die an der Halterung 17 befestigt ist. Mittels der Stellschraube 25 kann die Neigung des beweglichen Halters, bzw. der Ablenkplatte 21 eingestellt werden und damit die Auslenkung des Brennpunktes F1 der Fokussieroptik gegenüber der optischen Achse LB des Laserstrahles und des Werkstückes 4. Auch mit diesem optischen Systems lässt sich ein genau kreisrundes Loch schneiden, dessen Qualität auch hier vom Rundlauf der Halterung 17 abhängt.

3

Aus den Figuren 3 oder 7 ist ersichtlich, dass es optisch aquivalent wäre, eine nicht drehbare Fokussieroptik vorzusehen, wie sie bei den Bohr- oder Schweissanlagen üblich ist und statt dessen das Werkstück, bzw. den Werkstückträger fest oder einstellbar exzentrisch gegenüber der optischen Achse LB des Laserstrahles zu drehen. Für Spezialanwendungen ist es auch möglich, sowohl die Optik als auch den Werkstückträger drehbar anzuordnen. Als weitere Variante ist es möglich, den Ablenkspiegel 2 derart beweglich zu gestalten, dass der Laserstrahl, bzw. dessen Brennpunkt in einer kreisrunden Bahn bewegt wird. Dies würde jedoch mit sich führen, dass der Laserstrahl auf der Fokussieroptik verschiedene Zonen durchläuft, wodurch die Qualität der Bohrung leiden könnte. Selbstverständlich, und dies wurde eingangs betont, kann anstatt einer kreisrunden Bahn eine andere Kontur, beispielsweise ein Rechteck gewählt werden, wobei die Relativbewegung des Werkstückes zum Strahl dann im allgemeinen durch einen geeigneten Werkzeugträger durchgeführt wird.

In den Figuren 5 und 6 ist die Weiterverarbeitung eines Magnetplättchens 4 zum fertigen Produkt dargestellt. In Figur 5 ist der Trieb 36 eines Rotors dargestellt, auf dessen Zähnen 26 die Magnetscheibe 4 mittels einem anderen Laser an drei Punkten 27 angeschweisst ist. Das Ziel für diesen speziellen Fall war es, das Loch 35 dermassen glatt und exakt auszuschneiden, dass die Magnetscheibe 4 ohne weitere Bearbeitung, insbesondere ohne Grandieren, auf die Achse des Triebes 36 aufgesetzt und mit dieser verschweisst werden kann. Dabei ist nicht vorgesehen, spezielle Triebe dafür anzufertigen sondern die handelsüblichen sonst verwendeteten Triebe mit den engen Toleranzen zu verwenden.

In Figur 6 ist sehr schematisch eine Schweissanlage dargestellt, wie sie auch bei herkömmlich gebohrten Magnetscheiben verwendet wird. Bei I wird ein Trieb 36 aus einem Vorratsbehälter 28 auf die Station 29 gesetzt, woraufhin der Drehteller 30 um 90° gedreht wird. Bei der Stellung II wird nun die gebohrte Magnetscheibe 4 aufgesetzt, wobei diese Scheibe entweder aus einem Vorratsbehälter 31 entnommen wird, oder direkt von der Bohranlage mittels einem Behandlungsautomaten oder dergleichen transferiert wird. Im vorliegenden Fall sind im Vorratsbehälter 31 die Magnetplättchen 4 gespeichert, die direkt von der Bohranlage her stammen. In der Stellung III wird das Magnetplättchen mittels einem Laser 32 an den Trieb geschweisst, wobei die Bearbeitungsstation 29 in drei verschiedene Stellungen gedreht wird, woraufhin der Trieb mit angeschweisstem Magnetplättchen in der Stellung IV zur weiteren Bearbeitung in den Behälter 33 entladen wird. Selbstverständlich können sowohl die Bearbeitungsstation als auch die Transfereinrichtungen anders gestaltet sein, doch haben sie das eine gemeinsam, das die von der Bohranlage her stammenden Magnetplättchen 4 mit den Löchern 35 ohne weitere Bearbeitung auf den Trieb aufgesetzt und angeschweisst werden können.

Anstatt solcher Magnetplättchen mit den beschriebenen Dimensionen können nach dem angegebenen Verfahren auch andere Werkstücke direkt derart gemäss einer vorbestimmten Kontur geschnitten werden, dass sie ohne Zwischenbearbeitung wie Glätten der Ränder oder Grandieren auf bestimmten Durchmesser weiter verarbeitet werden können.

**Patentansprüche**

1. Verfahren zum Schneiden von Material mit einem Festkörper-Dauerstrichlaser, in dessen Kavität eine akusto-optische Q-Switch-Zelle angeordnet ist und der mit einer Pulsfrequenz von über 1 kHz betrieben wird, wobei das Material durch Aneinanderreihen von relativ zur Bahnlänge kleiner, sich überlappender Bohrungen abgetragen wird, dadurch gekennzeichnet, dass die Q-Switch-Zelle mit einem rf-Signal von grösser als 2,5 kHz beaufschlagt wird, wobei das Verhältnis der Sperrzeit zur Durchlasszeit auf 250-350:1 eingestellt wird, um zu verhindern, dass im Material die Curietemperatur erreicht wird und die geschlossene, vorzugsweise kreisrunde Bahn, mehrmals durchfahren wird, um die Ränder zwischen den einzelnen Bohrungen zu glätten.

2. Verfahren nach Anspruch 1, dadurch gekennzeichnet, dass zwischen dem Werkstück und dem Laserstrahl eine Relativverschiebung erzeugt wird, indem entweder der Strahl mittels einer Ablenkoptik oder der Bearbeitungsoptik abgelenkt wird oder das auf einem beweglichen Tisch sich befindliche Werkstück gegenüber dem Laserstrahl verschoben wird oder eine Kombination beider translatorischen Bewegungen veranlasst wird.

3. Verfahren nach Anspruch 2 zum Herstellen von Löchern, dadurch gekennzeichnet, dass eine aus einer Fokussieroptik und Ablenkteil bestehende, drehbar gelagerte Bearbeitungsoptik verwendet wird, deren Brennpunkt um den halben gewünschten Lochdurchmesser versetzt exzentrisch zum Lochmittelpunkt des Werkstücks eingestellt wird und die Bearbeitungsoptik mit einer Umdrehungsgeschwindigkeit von 10 bis 30 Umdrehungen pro Sekunde angetrieben wird.

**4.** Verfahren nach einem der Ansprüche 1 - 3 für die Herstellung eines Loches in einem Rotorplättchen für einen Mikromotor, dadurch gekennzeichnet, dass die Bearbeitung des Loches solange erfolgt, bis dessen Rand soweit geglättet ist, dass das Plättchen ohne weitere Bearbeitung auf den Rotor-Trieb aufgesetzt und dort angeschweisst werden kann.

**5.** Vorrichtung zur Durchführung des Verfahrens nach Anspruch 1 zum Herstellen von Löchern in einem magnetisierbaren Material, dadurch gekennzeichnet, dass sie einen Dauerstrich-YAG-Neodym-Laser mit akusto-optischer Q-Switch-Zelle (1), eine Bearbeitungsoptik sowie Mittel aufweist, um den Laserstrahl gegenüber dem Werkstück (4) zu verschieben, wobei die Strahlenverschiebungsmittel eine Bearbeitungsoptik (3) enthalten, die in einer Halterung (6, 15) angeordnet ist, die über Zahnräder (13, 17) mit dem Getriebe (12, 18) eines Motors (11, 16) verbunden ist.

**6.** Vorrichtung nach Anspruch 5, dadurch gekennzeichnet, dass die Bearbeitungsoptik (3) eine zentrisch zur Laserstrahlachse (LB) angeordnete Keilplatte (14) aufweist und die nachgeordnete Fokussieroptik (5) auf den abgelenkten Strahl zentriert ist, derart, dass der Brennpunkt (F) der Fokussieroptik gegenüber der Laserstrahlachse (LB) um den halben gewünschten Lochdurchmesser versetzt ist.

**7.** Vorrichtung nach Anspruch 5, dadurch gekennzeichnet, dass die Bearbeitungsoptik (15) eine der Fokussieroptik (20) nachgeschalteten Ablenkplatte (21) aufweist, die in einem um einen Drehpunkt (23) gelagerten und bezüglich der Laserstrahlachse (LB) geneigten Halter (22) befestigt ist, wobei der Halter an dem Drehpunkt entgegengesetzten Ende in einer Kugel (24) gehalten ist, die mittels einer Stellschraube (25) verschiebbar ist, um die Neigung des Halters und der Ablenkplatte einstellen zu können.

**8.** Vorrichtung nach Anspruch 5 oder 6, dadurch gekennzeichnet, dass das Werkstück (4) in einer Halterung gehalten ist, die sowohl drehbar als auch translatorisch verschiebbar ist.

## Claims

**1.** Method for cutting materials by means of a solid-state continuous wave laser in whose cavity an acoustooptical Q-switch cell is provided and which is pulsed at a frequency greater than 1 kHz, said material being eroded by juxtaposing overlapping bores which are small with respect to the length of the path, characterised in that a radio frequency signal greater than 2.5 kHz is applied to said Q-switch cell, the ratio of non-transmitting to transmitting time being adjusted at 250-350:1 in order to prevent that the Curie temperature is attained in said material, and said path, which is preferably circular, being repeatedly run through in order to smooth the edges between said individual bores.

**2.** Method according to claim 1, characterised in that a relative displacement between the workpiece and the laser beam is effected either by deflecting said beam by means of an optical deflecting system or the optical processing system, or by displacing said workpiece with respect to said laser beam while placed on a movable table, or by effecting a combination of said two transational movements.

**3.** Method according to claim 2 for the production of holes, characterised in that an optical processing system consisting of an optical focusing system and of a deflecting element is used which is rotatably journalled and whose focus is adjusted in such a manner as to be eccentrically displaced with respect to the hole center of the workpiece by half the desired hole diameter, and that said optical processing system is driven at a rotational speed of 10 to 30 turns per second.

**4.** Method according to any one of claims 1 to 3 for the production of a hole in a rotor plate for a micromotor, characterised in that the processing of said hole is continued until its edges are smoothed to such an extent that said plate can be placed on the rotor pinion without any further treatment and welded to the latter.

**5.** Device for carrying out the method according to claim 1 for the production of holes in a magnetizable material, characterised in that said device comprises a continous-wave YAG-Neodymium laser having an acoustooptical Q-switch cell (1), an optical processing system, as well as means for displacing said laser beam with respect to the workpiece (4), said beam displacing means comprising an optical processing system (3) which is disposed in a rotatable mounting (6, 15) which is connected to the gear (12, 18) of a motor (11, 16) by gearwheels (13, 17).

6. Device according to claim 5, characterised in that said optical processing system (3) is provided with a camera wedge (14) which is arranged concentrically with respect to the laser beam axis (LB), and the following focusing optics (5) is centered upon the deflected beam in such a manner that the focus (F) of said focusing optics is displaced by half the desired hole diameter with respect to the axis (LB) of said laser beam.

7. Device according to claim 5, characterised in that said optical processing system (15) is provided with a deflecting plate (21) arranged after said focusing optics (20) and mounted in a holder (22) which is hinged on a pivot (23) and inclined with respect to the axis of the laser beam (LB), said holder being attached at its end opposite said pivot to a ball (24) which is displaceable by means of an adjusting screw (25) in order to allow an adjustment of said holder and of said deflecting plate.

8. Device according to claim 5 or 6, characterised in that said workpiece (4) is secured in a holder which is rotatable as well as tranlationally displaceable.

## Revendications

1. Procédé pour couper des matériaux à l'aide d'un laser solide continu dans la cavité duquel est disposée une cellule résonante, et qui est mis en service à une fréquence d'impulsions supérieure à 1 kHz, ledit matériau étant enlevé par une succession d'alésages relativement petits par rapport à la longueur du parcours et qui se recouvrent, caractérisé en ce qu'un signal de fréquence radio supérieur à 2,5 kHz est appliqué à ladite cellule résonante, le rapport entre le temps de blocage et le temps passant étant réglé à 250-350:1 afin d'éviter que le point de Curie soit atteint dans ledit matériau, et que le parcours fermé, préférablement circulaire, est balayé plusieurs fois pour égaliser les bords entre les alésages individuels.

2. Procédé selon la revendication 1, caractérisé en ce qu'un mouvement relatif est provoqué entre la pièce à usiner et le rayon laser, soit en déviant le rayon au moyen d'un système optique de déviation ou du système optique d'usinage, ou en déplaçant la pièce à usiner par rapport au rayon laser pendant qu'elle se trouve sur une table mobile, ou en effectuant une combinaison des deux mouvements de translation.

3. Procédé selon la revendication 2 pour faire des trous, caractérisé en ce que l'on utilise un système optique d'usinage monté libre en rotation sur paliers et constitué d'un système optique de focalisation et d'un élément déflecteur, dont le foyer est ajusté de manière à être excentriquement décalé à concurrence de la moitié du diamètre désiré du trou par rapport au centre du trou de la pièce à usiner, et que le système optique d'usinage est entraîné à une vitesse de 10 à 30 tours par seconde.

4. Procédé selon l'une quelconque des revendications 1 à 3 pour l'élaboration d'un trou dans une plaquette de rotor pour un micromoteur, caractérisé en ce que l'usinage du trou est poursuivi jusqu'à ce que ses bords soient égalisés de telle manière que la plaquette puisse être posée sur le pignon du rotor sans traitement ultérieur et soudée à ce dernier.

5. Dispositif pour la mise en oeuvre du procédé selon la revendication 1 pour faire des trous dans un matériau magnétisable, caractérisé en ce qu'il comprend un laser YAG-Néodyme continu avec cellule résonante acousto-optique (1), un système optique d'usinage ainsi que des moyens pour déplacer le rayon laser par rapport à la pièce à usiner (4), les moyens de déplacement du rayon comportant un système optique d'usinage (3) qui est maintenu dans un support (6, 15), lequel est relié à l'engrenage (12, 18) d'un moteur (11, 16) par des roues dentées (13, 17).

6. Dispositif selon la revendication 5, caractérisé en ce que le système optique d'usinage (3) comporte un coin (14) monté concentriquement à l'axe du rayon laser (LB), et que le système optique de focalisation (5) subséquent est centré sur le rayon dévié de telle manière que le foyer (F) du système optique de focalisation est décalé de la moitié du diamètre désiré du trou par rapport à l'axe du rayon laser (LB).

7. Dispositif selon la revendication 5, caractérisé en ce que le système optique d'usinage (15) comporte après le système optique de focalisation (20) une plaque de déviation (21) montée dans un support (22) qui tourne autour d'un centre de rotation (23) et est incliné par rapport à l'axe du rayon laser (LB), ledit support étant maintenu à son extrémité opposée audit centre de rotation dans une bille (24) déplaçable au moyen d'une vis de réglage (25) afin de pouvoir ajuster l'inclinaison dudit support et de ladite plaque de déviation.

8.  Dispositif selon la revendication 5 ou 6, caractérisé en ce que la pièce à usiner (4) est maintenue dans un support rotatif ainsi que déplaçable en translation.

# FIG.1

# FIG.2

EP 0 460 338 B1

# FIG.3

9

# FIG. 4

# FIG. 5

# FIG. 6

EP 0 460 338 B1

# FIG.7

11